# EUROPEAN PATENT APPLICATION

(11) **EP 2 458 434 A1**
(43) Date of publication of application: **30.05.2012**
(21) Application number: 10193163.2
(22) Date of filing: 30.11.2010
(51) Int. Cl.: G03B 9/00, G03B 9/36, B29C 67/00

(54) **Additive manufacturing system, shutter, and method of building a product.**

(71) Applicant: Nederlandse Organisatie voor Toegepast -Natuurwetenschappelijk Onderzoek TNO, 2628 VK Delft (NL)
(72) Inventor: van der Werff, Jeichienus Johannes, 2628 VK Delft (NL)
(74) Representative: Jansen, Cornelis Marinus

(57) **Abstract**

Additive manufacturing system for building a product. The additive manufacturing system comprising a radiation source (4), an optical controller (6) that comprises a shutter (8), and a system frame (10) for holding a substrate (12) and a reactant (14). The shutter (8) comprises a shutter frame (20) having a guide (22) and having shutter frame connectors (24) on selected positions of the shutter frame (20). The shutter (8) has a shutter blade (28) movable along said guide (22) between said selected positions (26) and comprising a blade connector (30) that can be connected to a shutter frame connector (24). The blade connector (30) is arranged for being disconnectable from the shutter frame connector (24) when a disconnection force on the blade connector (30) is above a threshold disconnection force. The shutter (8) further comprises a launcher (29) provided for acting on the shutter blade (28) to provide a launching force larger than the threshold disconnection force. The shutter (8) also comprises an energy supply (36) for energizing the launcher (29).

## Description

The invention relates to an additive manufacturing system for building a product. The invention also relates to a shutter. The invention also relates to a method of building a product by means of an additive manufacturing system.

Additive manufacturing systems, such as rapid prototyping systems, may be used for building a product in a relatively short amount of time. Thereto multiple patterned layers may be deposited on each other, so that a multitude of different forms and shapes can be produced. Various techniques for depositing the patterned layers can be used, such as printing techniques or photopatterning techniques.

Normally, rapid prototyping systems have been used for building prototypes of industrial designs. By building such a prototype, design drawings can be verified. Furthermore, a three-dimensional understanding of design drawings can be improved. Thus, rapid prototyping systems have been appreciated for building prototypes of industrial designs.

Recently however, rapid prototyping systems have been used for building consumer products. It was found that the versatility and speed of rapid prototyping equipment is suitable for building products that are dedicated to a single consumer. Hence, rapid prototyping enables production of unique products. Typically, an internet service is used. Consumers can submit their designs and a central rapid prototyping system builds a product based on the submitted design. Afterwards, the build product can be sent to the consumer who submitted the design.

Nowadays, a wish has surfaced for rapid prototyping equipment that can be used locally, e.g. in a shop. Such offers the advantage that a customer can be served relatively quickly, and that transportation costs toward and/or from a central rapid prototyping system can be avoided. However, a rapid prototyping system that can be used locally poses new requirements to the system. It is e.g. important that costs of such a system are relatively low, because the system is used less often as the central system. Furthermore, reliability of the system should be relatively high, because repair is relatively time-consuming, as a mechanic has to travel to the local system if it needs to be repaired.

An important part of a rapid prototyping system is formed by a shutter of the system. Such a shutter is a mechanical part that has to perform repeated movement for building a product. 10³-10⁵ repetitions for building a single product may be typical. Hence, in a local system, it is of utmost importance that a relatively cheap and reliable shutter is provided. Furthermore, such a shutter must open and close relatively quickly, in order to not significantly slow down a rapid prototyping process.

However, known shutters prove to be unsuitable for use in a local system. Some shutters, e.g. shutters used in photographic systems, offer a very fast movement but are too expensive, while their reliability for the amount of repetitions during rapid prototyping may be unclear. Other shutters, e.g. shutters used in beamer systems, are relatively inexpensive but can not be expected to meet the requirements with regard to speed and/or reliability in a rapid prototyping system. A shutter that offers a combination of speed, cost and reliability that is suitable for use in a locally used rapid prototyping system is lacking in the prior art.

It is therefore an object of the invention to provide an improved additive manufacturing system and an improved shutter in order to at least partly meet problems with known systems and known shutters.

Thereto the invention provides an additive manufacturing system, such as a rapid prototyping system, for building a product, the additive manufacturing system comprising a radiation source for generating radiation, an optical controller that comprises a shutter for selectively allowing radiation generated by the radiation source to pass the shutter, and a system frame for holding a substrate and a reactant in contact with the substrate, said reactant being sensitive to at least part of the radiation generated by the radiation source, wherein the optical controller is arranged for guiding radiation that is generated by the radiation source and is allowed to pass the shutter, towards the reactant for building the product, wherein the shutter comprises: - a shutter frame having a guide and having shutter frame connectors on selected positions of the shutter frame; - a shutter blade movable along said guide between said selected positions and comprising a blade connector that can be connected to a shutter frame connector, e.g. one of the shutter frame connectors; - said blade connector being arranged for being disconnectable from the shutter frame connector, e.g. the one of the shutter frame connectors, when a disconnection force on the blade connector is above a threshold disconnection force; - a launcher provided for acting on the shutter blade to provide a launching force larger than the threshold disconnection force, and for thereby disconnecting the blade connector from the shutter frame connector, e.g. the one of the shutter frame connectors, so as to launch the shutter blade along the guide between said selected positions as a result of the launching force; and/or - an energy supply for energizing the launcher. By means of the launcher, a relatively rapid movement of the shutter blade can be realised. Thus, by means of the launcher, the shutter blade may move relatively rapidly from an opened position to a closed position and/or vice versa. Such rapid movement may be caused by the disconnection force that can build up to exceed the threshold disconnection force as a result of a connection between the blade connector and one of the shutter frame connectors. Additionally, costs of manufacturing such a shutter may be relatively low. Surprisingly, experiments performed by the inventors showed that the shutter enables a relatively high reliability of the system.

In an embodiment, the shutter frame connectors and/or the blade connector are provided by magnets. Experiments performed by the inventors showed that using magnets enables the realisation of a reliable shutter. Additionally, the connection force provided by magnets may decrease relatively strongly when the blade connector moves, together with the shutter blade, away from a shutter frame connector. Hence, the disconnection force that has build up to the threshold disconnection force may launch the shutter blade relatively unhindered by the magnetic connection force.

In an embodiment, the launcher comprises launcher springs corresponding to the shutter frame connectors, and spring stops abutting said launcher springs and movable relative to the shutter frame for thus energizing a corresponding launcher spring, said launcher springs arranged on either sides of the shutter blade along the guide. A disconnection force provided by the launcher springs may decrease relatively weakly when the blade connector moves, together with the shutter blade, away from a shutter frame connector. Thus, by means of the launcher springs, the disconnection force that has build up to the threshold disconnection force may launch the shutter blade over a relatively long distance. Thereto, preferably, the launcher springs, when uncompressed, may for example have a length of at least 0.5 centimeter, at least 1 centimeter, at least 1.5 centimeter, or at least 2 centimeter. However, alternatively, one or more, e.g. all, of the launcher springs may have another length.

The inventors also recognised the value of the shutter as such, i.e. independent from the additive manufacturing system. Therefore, the invention further provides a shutter for selectively allowing radiation generated by the radiation source to pass the shutter, wherein the shutter comprises: - a shutter frame having a guide and having shutter frame connectors on selected positions of the shutter frame; - a shutter blade movable along said guide between said selected positions and comprising a blade connector that can be connected to a shutter frame connector, e.g. one of the shutter frame connectors; - said blade connector being arranged for being disconnectable from the shutter frame connector, e.g. the one of the shutter frame connectors, when a disconnection force on the blade connector is above a threshold disconnection force; - a launcher provided for acting on the shutter blade to provide a launching force larger than the threshold disconnection force, and for thereby disconnecting the blade connector from the shutter frame connector, e.g. the one of the shutter frame connectors, so as to launch the shutter blade along the guide between said selected positions as a result of the launching force; and/or - an energy supply for energizing the launcher. Embodiments or variations of the shutter described herein as part of an additive manufacturing system, can also be provided as a shutter as such, i.e. independent from the additive manufacturing system.

It is another object of the invention to provide an improved method of building a product by means of an additive manufacturing system.

Thereto the invention provides a method of building a product by means of an additive manufacturing system, such as a rapid prototyping system, comprising generating radiation by means of a radiation source comprised by the additive manufacturing system, comprising selectively allowing radiation generated by the radiation source to pass a shutter comprised by an optical controller of the additive manufacturing system, and comprising holding a substrate and a reactant in contact with the substrate by means of a system frame, said reactant being sensitive to at least part of the radiation generated by the radiation source, wherein the method further comprises guiding, by means of the optical controller, radiation that is generated by the radiation source and is allowed to pass the shutter, towards the reactant for building the product, the method further comprising: - moving a shutter blade along a guide comprised by a shutter frame of the shutter between selected positions of the shutter frame, on which selected positions shutter frame connectors are provided; - connecting a blade connector of the shutter blade to a shutter frame connector; - disconnecting said blade connector from the shutter frame connector when a disconnection force on the blade connector is above a threshold disconnection force; - launching, by means of a launcher provided for acting on the shutter blade to provide a launching force larger than the threshold disconnection force, the shutter blade along the guide between said selected positions as a result of the launching force and thereby disconnecting the blade connector from the shutter frame connector; and/or - energizing the launcher by means of an energy supply.

Further advantageous embodiments of the additive manufacturing system, the shutter, and the method of building a product, are described herein below and with respect to the accompanying drawings.

The invention will now be described, in a non-limiting way, with reference to the accompanying drawings, in which:
Figure 1A shows a rapid prototyping system in a first embodiment according to the invention;
Figure 1B shows the rapid prototyping system in the first embodiment in a side view;
Figure 2 shows a variation of a shutter;
Figure 3A shows a shutter with a shutter blade in a closed position;
Figure 3B shows a shutter with the shutter blade in an intermediate position;
Figure 3C shows a shutter with a shutter blade in an opened position;
Figure 4A shows a further variation of a shutter with a shutter blade in a closed position; and
Figure 4B shows the further variation of a shutter with a shutter blade in an opened position.

Unless stated otherwise, similar reference numbers refer to like components throughout the drawings.

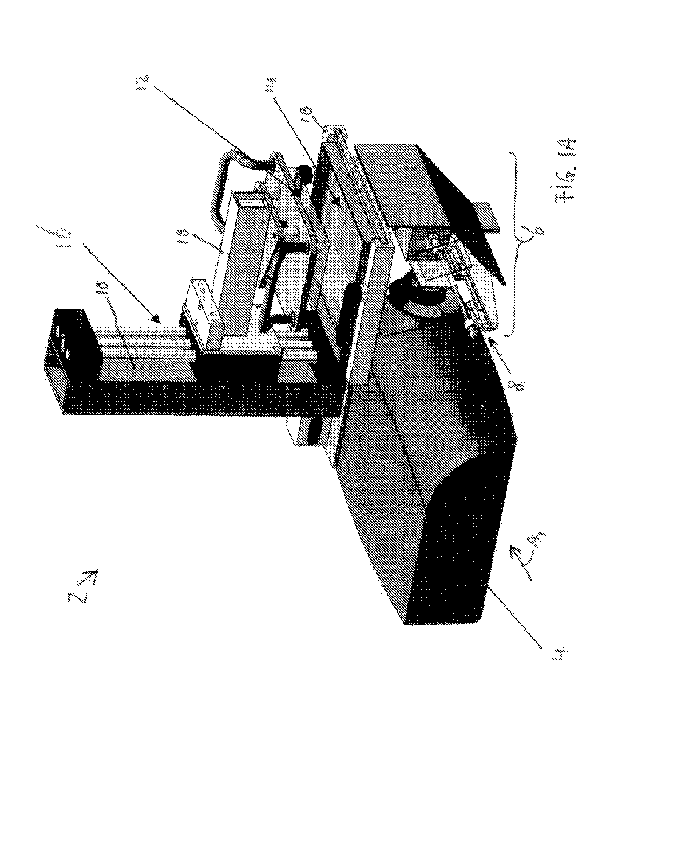

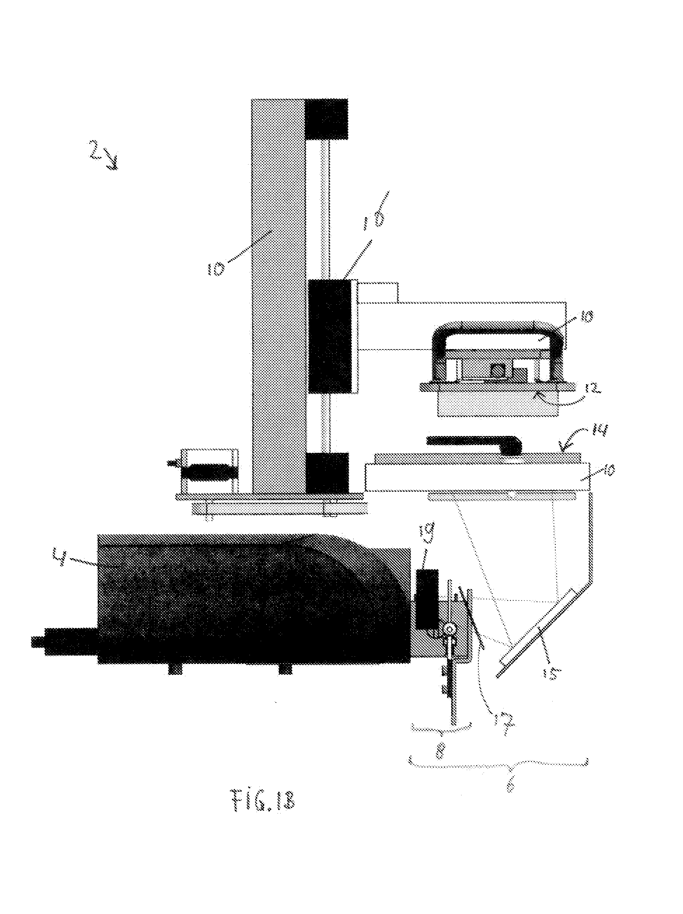

Figure 1A shows a rapid prototyping system 2 in a first embodiment according to the invention. Figure 1B shows the rapid prototyping system 2 in the first embodiment in a side view along a direction indicated in figure 1A by arrow A₁. The rapid prototyping system 2 is an example of an additive manufacturing system, and is arranged for building a product. The rapid prototyping system 2 comprises a radiation source 4 for generating radiation. In the examples described herein, the rapid prototyping system 2 comprises an illumination source 4 for generating light. However, the invention may also relate to rapid prototyping systems comprising a radiation source for generating other kinds of radiation than visible light, e.g. (invisible) ultraviolet or infrared radiation. The illumination source 4 may e.g. comprise a beamer 4. Such a beamer may be conventional. The beamer may be suitable for projecting images on a projection surface, in particular in reactant14.

The rapid prototyping system 2 may further comprise an optical controller 6. The optical controller 6 may comprise a shutter 8 for selectively allowing radiation generated by the radiation source 4 to pass the shutter 8. Such selectivity may be enabled by the shutter 8 being able to close and to open. When the shutter is open, radiation generated by the radiation source 4 may be allowed to pass the shutter 8. When the shutter is closed, less or substantially no radiation may be allowed to pass the shutter 8. This offers the advantage that a radiation source can be used that may continuously emit radiation. Such may be the case for a conventional beamer. For a conventional beamer, even when a black image is projected, some radiation is still emitted. By closing the shutter, an amount of radiation that reaches the reactant may be significantly reduced. It is noted that typically, prototyping system 2 will be enclosed by a (partially transmissive) radiation filter that at least blocks curing radiation from ambient sources in a range of the electromagnetic spectrum that cures the photosensitive resin.

The rapid prototyping system 2 may comprise a system frame 10 for holding a substrate 12 and for holding a reactant 14 in contact with the substrate 12. The reactant 14 may be sensitive to at least part of the light generated by the illumination source 4. The reactant may e.g. comprise a photosensitive polymer. E.g., the reactant may comprise a solution of photosensitive polymer. More in general, the reactant being sensitive to at least part of the radiation in use generated by the radiation source 4 may mean that the reactant, in use, reacts, e.g. hardens, as a result of the radiation generated by the radiation source 4.

The optical controller may be arranged for guiding radiation that is generated by the illumination source 4 and is allowed to pass the shutter 8, towards the reactant for building the product. For enabling such guiding, the optical controller may comprise at least one mirror 15 and/or at least one filter 17, e.g. a blue filter 17. A radiation transfer characteristic of the filter, e.g. a wavelength band for which the filter allows radiation to pass the filter, is preferably adjusted to a sensitivity of the reactant. Thus, the filter may be arranged for allowing radiation to pass the filter for which radiation the reactant is sensitive. Thus, more in general, the optical controller may comprises a filter, preferably a blue filter, and may be arranged for guiding the radiation that is generated by the radiation source 4 through the filter towards the reactant for building the product. As a result of said light, part of the reactant 14, in particular, a projected image therein, may react to cure into a patterned layer. Thus, the reactant 14 may form, after reacting, part of a solid product on the substrate 12. By repeating such reacting and moving the substrate upwards after each reacting step, a plurality of layers may be formed. Thus, the product can be build.

The radiation source 4 and/or the optical controller 6 may be arranged for focussing light in a focal plane on or adjacent to the substrate 12. Thereto the radiation source 4 may comprise a first lens 19. In addition, the optical controller 8 may comprise a second lens (not drawn in figures 1A and 1B but known as such to the skilled person). By means of the second lens, a higher resolution may be achieved. Such may enable manufacturing of relatively small products.

The rapid prototyping system may comprise a transporter 16 for transporting the substrate 12 in a direction away from the focal plane. Thus, a product may be build by repeatedly and alternatingly irradiating, e.g. illuminating, the reactant and moving the substrate 12 away from the focal plane, e.g. upwards. Thus, a plurality of patterned layers may be deposited in connection with a previously deposited layer each other. Thus, a stack of layers may be formed. In use of the system according to the first embodiment, the stack of layers grows downwardly with respect to the substrate 12, as the substrate 12 is moved upwardly in between reaction steps, e.g. when the shutter is closed. Hence, a multitude of different forms and shapes can be produced. Patterning can be achieved be illuminating a pattern in the focal plane. If e.g. a conventional beamer 4 is used, such pattern may be formed by sending an image that comprises the pattern from a computer to the beamer 4. However, other patterning methods may be used as well.

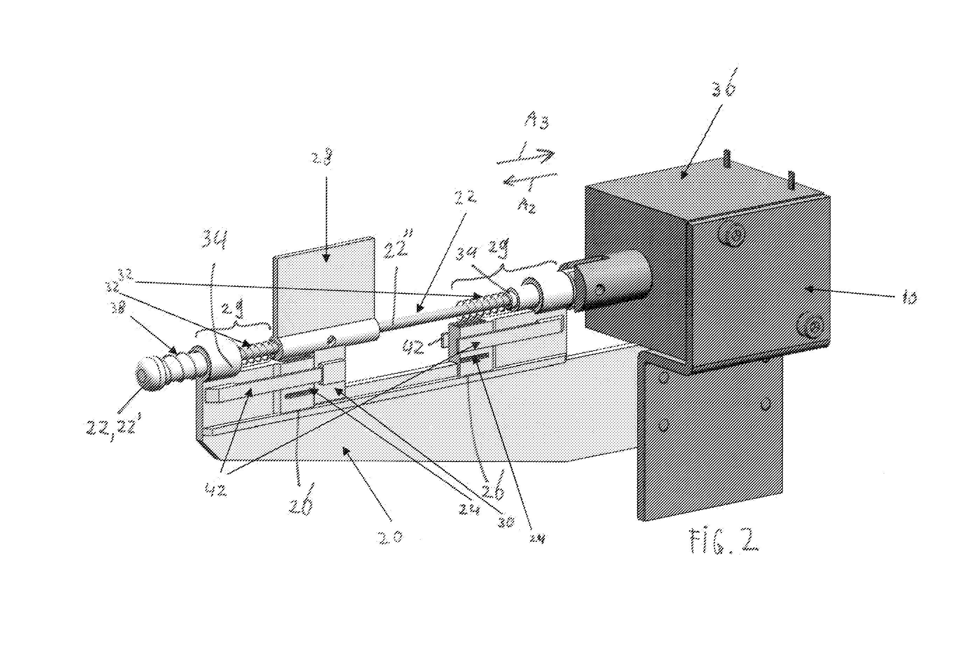

Figure 2 shows a variation of the shutter 8 of the rapid prototyping system 2. Said variation of the shutter 8 may be comprised by the rapid prototyping system 2 in the first embodiment. Said shutter 2 may be used in the first method. The shutter 8 may comprise a shutter frame 20. The shutter frame 20 may have a guide 22. The shutter frame 20 may further have shutter frame connectors 24. The shutter frame connectors 24 may be positioned on selected positions 26 of the shutter frame 20. The shutter frame connectors 24 may be provided by magnets. The term 'magnet' may herein be interpreted broadly and may comprise a permanent magnet, an electromagnetic magnet, or a magnetizable material that becomes magnetic in a magnetic field, e.g. under the influence of a permanent magnet or an electrodynamic magnet, such as a paramagnetic material.

The shutter 8 may further comprise a shutter blade 28 that is movable along said guide 22 between said selected positions 26. Thus, the shutter blade 28 may be movable from a blade position adjacent to one of the selected positions 26 to a blade position adjacent to another one of the selected positions 26. The shutter blade 28 may further comprise a blade connector 30 that can be connected to a shutter frame connector 24, i.e. either one of the shutter frame connectors 24. The blade connector 30 may be provided by at least one magnet. In an embodiment, the blade connector 30 may be provided by a ferritic metal element and the shutter frame connectors 24 may be provided by permanent or electromagnetic magnets. In another embodiment, the blade connector may be provided by a permanent of electromagnet magnet, and the frame connectors 24 may be provided by ferritic metal elements.

Providing the blade connector 30 and/or the shutter frame connectors 24 by one or more magnets may be advantageous. By using magnets, reliable connectors may be provided. Such reliablity may enable the many repetitions that may be used for building the product. More in general, the shutter frame connectors 24 may be formed by at least a first shutter frame connector and a second shutter frame connector. The first shutter frame connector may be formed by a first magnet. The second shutter frame connector may be formed by a second magnet. One or more of the magnets, e.g. the first magnet and/or the second magnet and/or the blade magnet may comprise neodynium. Neodynium enables a relatively small magnet providing a relatively strong magnetic force.

The blade connector 30 may be arranged for being disconnectable from the shutter frame connectors 24. Disconnecting from one of the shutter frame connectors may be realised when a disconnection force on the blade connector 30 is above a threshold disconnection force. Such a disconnection force may be comprised by a launcher 29. Such a launcher 29 may provide for acting on the shutter blade 30 to provide a launching force that is larger than the threshold disconnection force. When the launching force exceeds the threshold disconnection force, the blade connector may be disconnected from a shutter frame connector 24, i.e. the shutter frame connector to which the blade connector was connected directly before the launching force exceeded the threshold disconnection force . As a result, the shutter blade 30 may be launched along the guide 22 between said selected positions 26 as a result of the launching force.

The launcher 29 may comprise launcher springs 32 corresponding to the shutter frame connectors 24. The launcher may further comprise spring stops 34 abutting said launcher springs 32. The spring stops 34 may be movable relative to the shutter frame 20 and/or the launcher springs 32. By energizing a launcher spring 32, the shutter blade 28 may be launched. The launcher springs 32 may be arranged on either sides of the shutter blade 28 along the guide 22.

The spring stops 34 may be arranged on the guide 22. The guide 22 may be movable relative to the shuttter frame 20. The guide 22 may comprise a rod 22" movably mounted in the shutter frame 20. The guide 22 may have the shutter blade 28 slidingly connected thereto along the rod 22". The launcher springs 32 may be arranged around the rod 22".

The shutter may further comprise an energy supply for energizing the launcher. Said energy supply may comprise an actuator for moving the guide 22 relative to the shutter frame 20. The actuator may comprise a solenoid 36. The actuator and/or the solenoid may be connected to the shutter frame 20. The actuator and/or the solenoid may be connected to the shutter blade 28 via the launcher springs 32 and the spring stops 34. The actuator may comprise a guide spring 38 connecting the guide 22, in particular a guide end 22', and the shutter frame 20. When the guide spring 38 is compressed, the guide spring 38 may act, in use, on the shutter blade 28, via the spring stops 34 and the launcher springs 32, in a direction A₂ opposite to a direction A₃ of actuation by the solenoid 36.

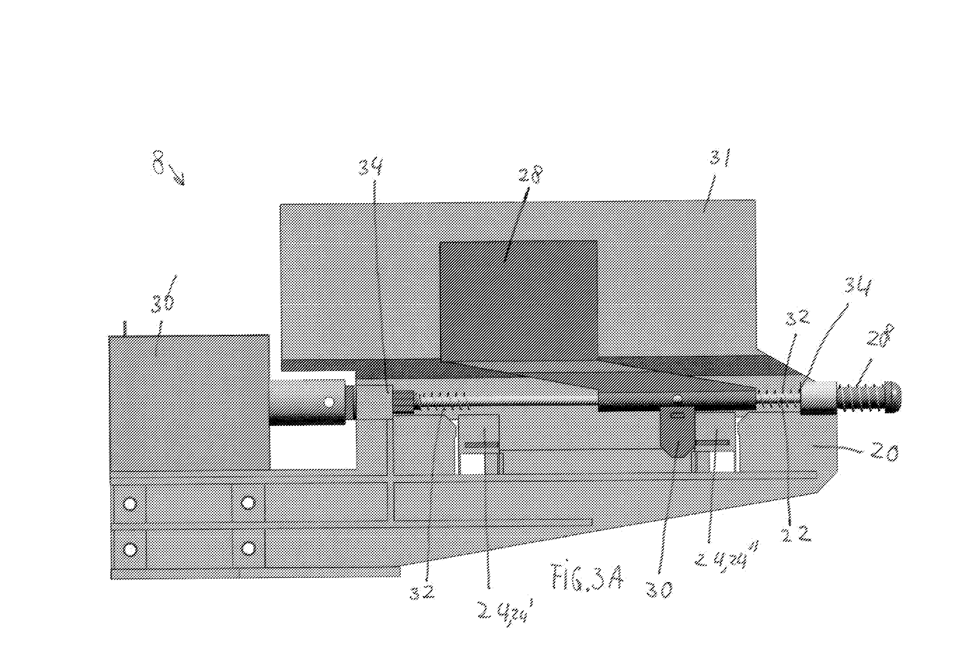

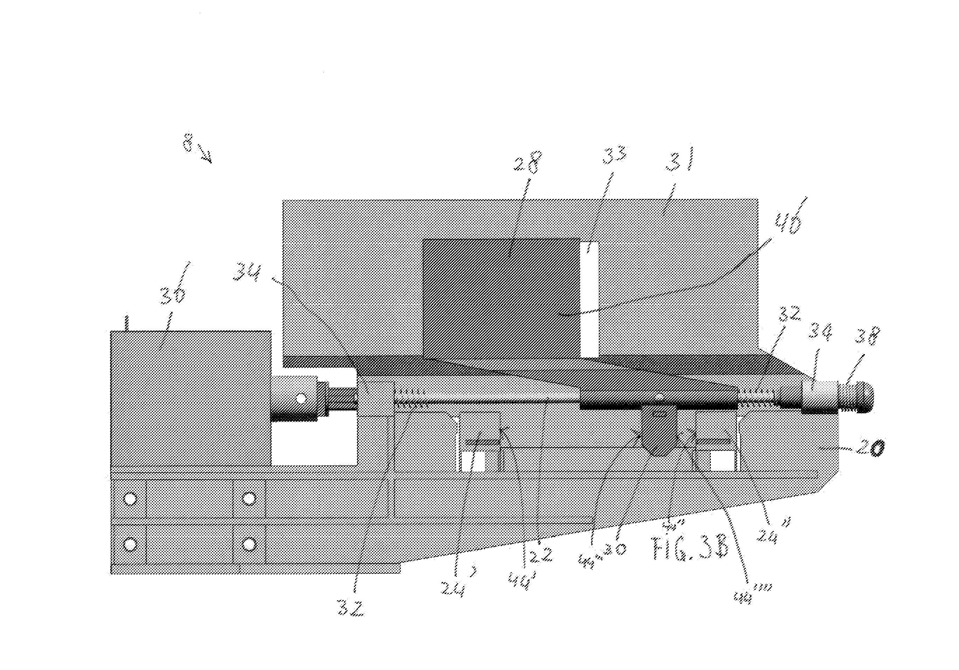

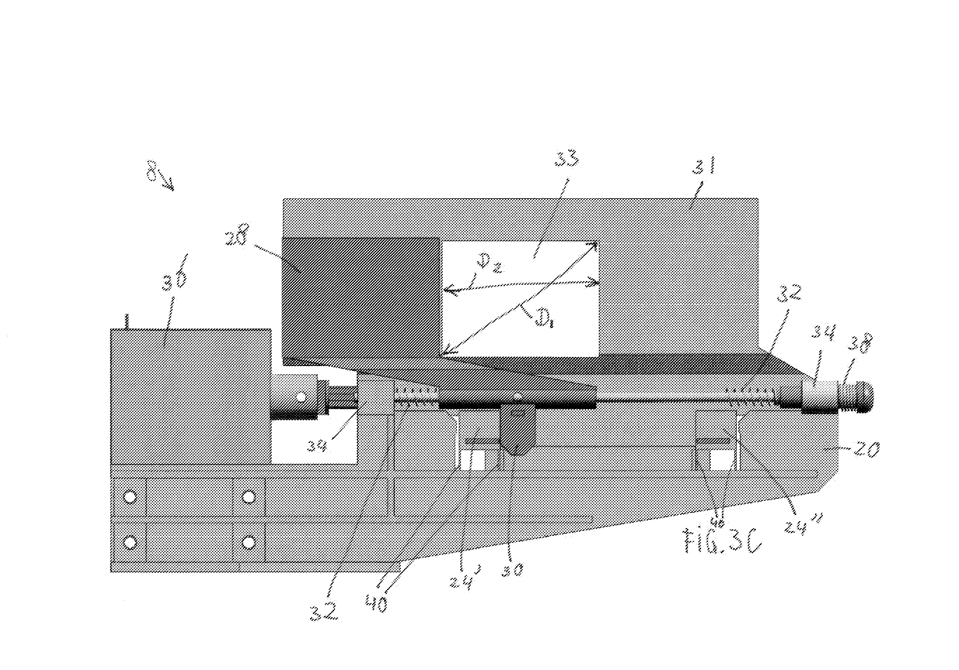

Figures 3A-3C show a view of another variation of the shutter 8. Figure 3A shows the shutter 8 with the shutter blade 28 in a closed position. Figure 3B shows the shutter 8 with the shutter blade 28 in an intermediate position. Figure 3C shows the shutter 8 with the shutter blade 28 in an opened position. The actuator, here the solenoid 36 and the guide spring 38, may be arranged for moving the movable shutter blade 28 along the guide 22 from the closed position wherein the shutter 8 in use blocks generated radiation, to the opened position wherein the shutter in use allows generated radiation to pass the shutter 8, and vice versa.

The shutter blade 8 may comprise the blade magnet 30. The shutter frame 20 may further comprise the first magnet 24' and the second magnet 24" that are mutually spaced apart along the guide 22. The first magnet 24', the second magnet 24", and the blade magnet 30 may be positioned so that the first magnet 24' holds the blade magnet 30 with a first holding force when the shutter blade 28 is in the opened position and the second magnet 24" holds the blade magnet 30 with a second holding force when the shutter blade 28 is in the closed position.

The shutter 8 may further comprises the launcher springs 32, here corresponding to respectively the first and second magnet 24', 24". The actuator may be arranged for energizing either one of the launcher springs 32, i.e. one launcher spring at a time, e.g. alternatingly. In use, the shutter blade may be moved by an energized, e.g. compressed, one of the launcher springs 32 corresponding to the second magnet 24" from the closed position to the opened position when a force exerted by the actuator (via the launcher spring corresponding to the second magnet) on the shutter blade exceeds the second holding force. In use, the shutter blade may be moved by an energized, e.g. compressed, one of the launcher springs corresponding to the first magnet from the opened position to the closed position when a force exerted by the actuator (via the launcher spring corresponding to the first magnet) on the shutter blade exceeds the first holding force. Thus, in use, the shutter blade 28 may be moved by the actuator from the closed position to the opened position when a force exerted by the actuator on the shutter blade exceeds the second holding force, and the shutter blade 28 may be moved by the actuator from the opened position to the closed position when a force exerted by the actuator on the shutter blade exceeds the first holding force. The first holding force and the second holding force may be generally similar or generally different from each other. The first holding force and the second holding force may be examples of a threshold holding force. The threshold holding force may be equal to the threshold disconnection force.

The shutter 8 may further comprise a border 31. The border 31 may extend from the shutter blade 28 when the shutter blade is in the closed position. The border 31 may define an aperture 33 through which at least part of the light can pass the shutter 8 when the shutter blade 28 is in the opened position. A maximum size of the aperture, here a diagonal D₁ of the rectangular aperture 33, may e.g. be in a range from 5 centimeter to 15 centimeter. However, other maximum sizes are also possible. A maximum size D₂ of the aperture along the guide 22 may e.g. be in a range from 3 centimeter to 12 centimeter. The inventors showed that, for a rectangular aperture having a maximum size along the guide 22 of about 5 centimeter, the travel time of the shutter blade from the opened position to the closed position and/or vice versa can be approximately 0.1 to 0.2 seconds. For typical materials, an illumination time for reacting a single layer of reactant during building of the product may typically be approximately three to four seconds. Then, a travel time of 0.1 to 0.2 seconds has a relatively small effect on a total building time of the product.

The shutter 8 in the variation of figures 3A-3C may be similar to the shutter 8 in the variation of figure 2, except for a way of mounting the shutter frame connectors. In figure 2, the shutter frame connectors 24 are mounted rigidly to the shutter frame 24. In figures 3A-C, the shutter frame connectors 24 are mounted resiliently to the shutter frame. Such a resilient connection may e.g. be realised by flexible resilient connection elements 40. In the variation of figure 2, the shutter frame is provided with damping elements 42. Thus, more in general, at least one or two of the shutter frame connectors 24, e.g. the first magnet and/or the second magnet, may be resiliently mounted to the shutter frame, and/or the blade connector 30, e.g. the blade magnet 30, may be resiliently mounted to the shutter blade 28. As a result, a reliability of the at least one shutter frame connector and/or the blade connector may be improved. Additionally, an amount of sound produced by the impacts may be reduced. E.g. when the shutter is used in a shop, such sound reduction may be useful. The improved reliability may result from a better shock absorption, enabled by the resilient connection elements and/or the damping elements, when the blade magnet 30 impacts on the first magnet 24' after being disconnected and being launched away from the second magnet 24", or impacts on the second magnet 24" after being disconnected and being launched from the first magnet 24'.

In both of the variations of respectively figure 2 and figures 3A-C, the first magnet 24' may be provided with a first protective cover 44 that is provided at least in between the first magnet 24' and the blade magnet 30 when the shutter 8 is in the opened position. Similarly, the second magnet 24" may be provided with a second protective cover 44" that is provided at least in between the second magnet 24" and the blade magnet 30 when the shutter is in the closed position. The blade magnet may be provided with a protective cover 44"' in between the first magnet 24' and the blade magnet 30 and/or with a protective cover 44"" in between the second magnet 24' and the blade magnet 30. By means of such covers, the magnets may be protected. Such may be important, given the relatively large amounts of impact that occur between the blade magnet on the one hand with the first and second magnets on the other hand.

Preferably, a thickness of the first protective cover 44 and/or a thickness of the second protective cover 44" and/or a thickness of the protective cover 44"" in between the first magnet and the blade magnet and/or a thickness of the protective cover in between the second magnet 24' and the blade magnet 30, may be generally in a range from 0.05 millimeter to 1 millimeter, more preferably in a range from 0.1 millimeter to 0.5 millimeter, typically approximately 0.2 millimeter.

A total thickness of the shutter blade 28 in combination with the shutter frame 20 may be at most 15 millimeter, when measured in a direction perpendicular to a surface 46 of the shutter blade 28.

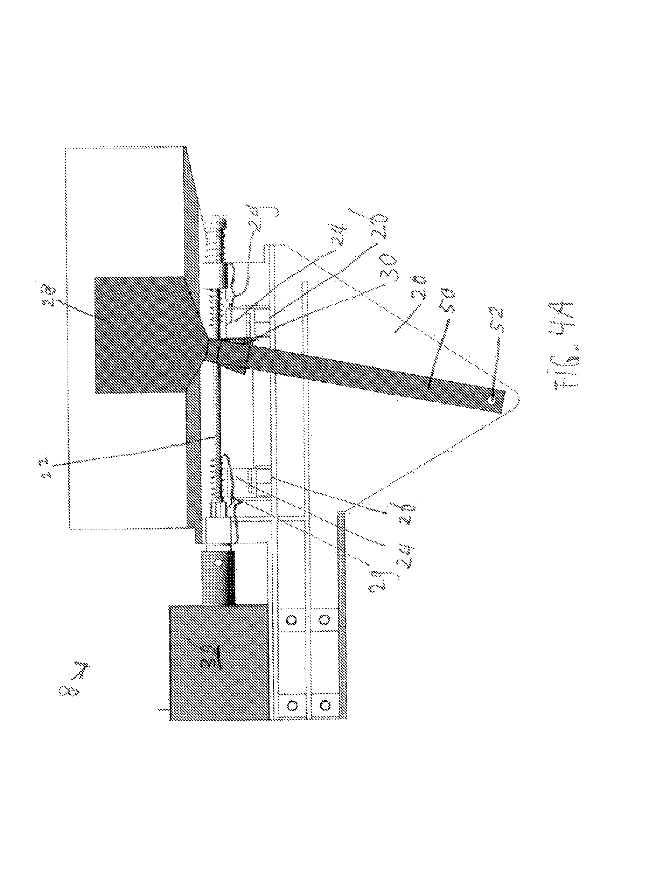

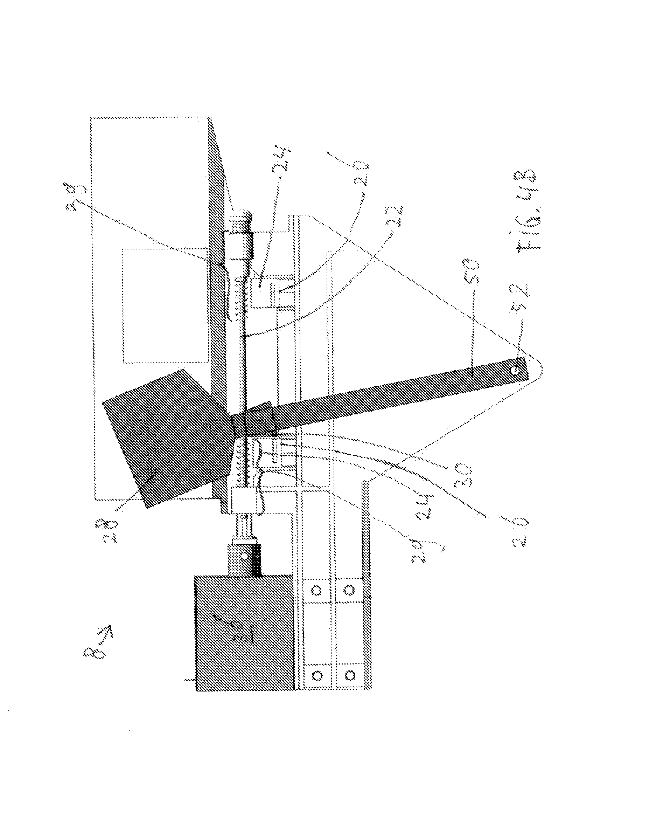

Figure 4A shows a further variation of the shutter 8 with the shutter blade 28 in the closed position. Figure 4B shows the further variation of the shutter 8 with the shutter blade 28 in the opened position. The shutter 8 in the further variation can be used in the rapid prototyping system 2 in the first embodiment or in another additive manufacturing system. The shutter 8 may comprises a shutter frame 20 having the guide 22 and having the frame connectors 24 on selected positions 26 of the shutter frame 20. The shutter 8 further has the shutter blade 28 movable along said guide 22 between said selected positions 26. The shutter blade 28 comprises the blade connector 30 that can be connected to the shutter frame connector 24, i.e. either one of the shutter frame connectors 24. The blade connector 30 is arranged for being disconnectable from the shutter frame connector 24, i.e. either one of the shutter frame connectors, when a disconnection force on the blade connector is above a threshold disconnection force. The shutter 8 further comprises the launcher 29 provided for acting on the shutter blade 8 to provide a launching force larger than the threshold disconnection force, and for thereby disconnecting the blade connector 30 from the shutter frame connector 24 so as to launch the shutter blade 28 along the guide 22 between said selected positions as a result of the launching force. The shutter may further comprise the energy supply 36 for energizing the launcher. Thus, by means of the shutter frame 20, the shutter blade 28, the launcher 29, and the energy supply 36, the shutter 8 may be arranged for selectively allowing radiation generated by a radiation source to pass the shutter 8.

In the further variation of the shutter 8, the shutter blade may be pivotly connected to the shutter frame 20. Thereto the shutter blade 28 may be provided with an arm 50 and a pivot 52, so that the shutter blade 28 can be pivotly connected to the shutter frame 20 by means of the arm 50 and the pivot 52. It may be clear that the pivot 52 allows for movement of the shutter blade 28 along the guide 22 from the opened position to the closed position and vice versa. Using the pivot 52 may enable optimising a bearing of the moving shutter blade. Such may increase a reliability of the shutter 8. In another embodiment, the arm 50 may be one of a plurality of arms, e.g. shaped as a parallelogram.

The rapid prototyping system 2 in the first embodiment may be used in a first embodiment of a method of building a product by means of an additive manufacturing system (the first method). The first method may comprise generating radiation by means of the radiation source 4 comprised by the rapid prototyping system 2. The first method may further comprise selectively allowing radiation generated by the radiation source to pass the shutter 8 comprised by the optical controller 6 of the rapid prototyping system 2. The shutter 8 may e.g. be the shutter 8 according to the variant, the other variant, the further variant, or may be another shutter. The first method may also comprise holding the substrate 12 and the reactant 24 in contact with the substrate 12 by means of the system frame 10. Then, the reactant can be reacted by means of the radiation generated by the radiation source 4. The first method may further comprise guiding, by means of the optical controller 6, radiation that is generated by the radiation source 4 and is allowed to pass the shutter 8, towards the reactant 14 for reacting the reactant 14 and thus building the product.

The first method may comprise moving the shutter blade 28 along the guide 22 comprised by the shutter frame 20 of the shutter 8 between selected positions of the shutter frame 20, on which selected positions shutter frame connectors 24 are provided. The shutter blade 28 comprising the blade connector 30 may be connected to one of the shutter frame connectors 24. According to the first method, said blade connector 30 may be disconnected from the one of the shutter frame connectors 24 when a disconnection force on the blade connector 30 is above a threshold disconnection force. Together with said disconnecting, the first method may comprise launching, by means of the launcher 30 provided for acting on the shutter blade 28 to provide a launching force larger than the threshold disconnection force, the shutter blade 28 along the guide 22 between said selected positions 26 as a result of the launching force. Thus, by said launching, the blade connector 30 is disconnected from the shutter frame connector 24. The first method may also comprises energizing the launcher 29 by means of an energy supply 36.

Further, the invention provides a rapid prototyping system for building a product, the system comprising a radiation source, e.g. an illumination source, for generating radiation, e.g. light, an optical controller that comprises a shutter for selectively allowing radiation generated by the radiation source to pass the shutter, and a frame for holding a substrate and a reactant in contact with the substrate, said reactant being sensitive to at least part of the radiation generated by the radiation source, wherein the optical controller is arranged for guiding radiation that is generated by the radiation source and is allowed to pass the shutter, towards the reactant for building the product, wherein the shutter comprises a shutter frame having a guide, and comprises a movable shutter blade and an actuator arranged for moving the movable shutter blade along the guide from a closed position wherein the shutter in use blocks generated radiation, to an opened position wherein the shutter in use allows generated radiation pass the shutter, and vice versa, wherein the shutter blade comprises a blade connecter and the shutter frame comprises a first frame connector and a second frame connector, wherein the first and second frame connectors and the blade connector are positioned so that the first frame connector holds the blade connector with a first holding force when the shutter blade is in the opened position and the second frame connector holds the blade connector with a second holding force when the shutter blade is in the closed position, wherein the shutter further comprises launcher springs corresponding to respectively the first and second frame connector, wherein the actuator is arranged for energizing either one of the launcher springs, wherein, in use, the shutter blade is moved by an energized one of the launcher springs corresponding to the second frame connector from the closed position to the opened position when a force exerted by the actuator on the shutter blade exceeds the second holding force, and the shutter blade is moved, in use, by an energized one of the launcher springs corresponding to the first shutter frame connector from the opened position to the closed position when a force exerted by the actuator on the shutter blade exceeds the first holding force. Preferably, the first shutter frame connector, e.g. a first magnet, the blade connector, e.g. a blade magnet, and the second shutter frame connector, e.g. a second magnet, are positioned, and a strength of the first shutter frame connector, the blade connector, and the second shutter frame connector, is arranged, so that a travel time of the shutter blade from the opened position to the closed position and/or vice versa is in a range from 0.05 second to 0.5 second, preferably in a range from 0.1 second to 0.3 second. Further, the invention provides an optical controller that comprises a shutter for selectively allowing radiation generated by a radiation source to pass the shutter, wherein the shutter comprises a shutter frame having a guide, and comprises a movable shutter blade and an actuator arranged for moving the movable shutter blade along the guide from a closed position wherein the shutter in use blocks the generated radiation, to an opened position wherein the shutter in use allows the generated radiation pass the shutter, and vice versa, wherein the shutter blade comprises a blade connector, e.g. a blade magnet, and wherein the shutter frame comprises a first shutter frame connector, e.g. a first magnet, and a second shutter frame connector, e.g. a second magnet, that are mutually spaced apart along the guide, wherein the first shutter frame connector, the second shutter frame connector, and the blade connector are positioned so that the first shutter frame connector holds the blade connector with a first holding force when the shutter blade is in the opened position and the second shutter frame connector holds the blade connector with a second holding force when the shutter blade is in the closed position, wherein the shutter further comprises launcher springs corresponding to respectively the first and second shutter frame connector, wherein the actuator is arranged for energizing either one of the launcher springs, wherein, in use, the shutter blade is moved by an energized one of the launcher springs corresponding to the second shutter frame connector from the closed position to the opened position when a force exerted by the actuator on the shutter blade exceeds the second holding force, and the shutter blade is moved, in use, by an energized one of the launcher springs corresponding to the first shutter frame connector from the opened position to the closed position when a force exerted by the actuator on the shutter blade exceeds the first holding force. The invention also provides a method of building a product by means of a rapid prototyping system, the method comprising:- generating radiation by means of a radiation source; - selectively allowing radiation generated by the radiation source to pass a shutter that is comprised by an optical controller; - holding a substrate, and a reactant in contact with the substrate, in a frame, said reactant being sensitive to at least part of the radiation generated by the radiation source; - guiding, by means of the optical controller, the radiation that is generated by the radiation source and is allowed to pass the shutter, towards the reactant for building the product, - holding a blade connector, e.g. a blade magnet, comprised by the shutter blade by means of a first shutter frame connector, e.g. a first magnet, comprised by the shutter frame when the shutter blade is in the opened position and holding the blade connector, e.g. the blade magnet, by means of a second shutter frame connector, e.g. a second magnet, comprised by the shutter frame when the shutter blade is in the closed position, the first shutter frame connector and second shutter frame connector being mutually spaced apart along a guide of a shutter frame comprised by the shutter, - moving a movable shutter blade comprised by the shutter along the guide from a closed position wherein the shutter blocks the generated radiation, to an opened position wherein the shutter allows the generated radiation to pass the shutter, and vice versa, - wherein moving the shutter blade from the closed position to the opened position comprises exerting, by means of an actuator and preferably via a launcher spring of the shutter, a force on the shutter blade that exceeds a second holding force generated by the second shutter frame connector on the blade connector when the shutter blade is in the closed position, and wherein moving the shutter blade from the opened position to the closed position comprises exerting, by means of the actuator and preferably via another launcher spring of the shutter, a force on the shutter blade that exceeds a first holding force generated by the first shutter frame connector on the blade connector when the shutter blade is in the opened position. Preferably, the method comprises dampening a shock when the blade magnet reaches the first magnet, preferably by providing a resilient mount for the first magnet in the frame, providing a resilient mount for the second magnet in the frame, and/or providing a resilient mount for the blade magnet in the shutter blade. The method may be carried out by means of a rapid prototyping system according to the invention.

The invention is not limited to any embodiment herein described and, within the purview of the skilled person, modifications are possible which may be considered within the scope of the appended claims. Equally all kinematic inversions are considered inherently disclosed and to be within the scope of the present invention. The use of expressions like: "preferably", "in particular", "typically", etc. is not intended to limit the invention. The indefinite article "a" or "an" does not exclude a plurality. Aspects of disclosed embodiment may be suitably combined with other embodiments and are deemed disclosed. Features which are not specifically or explicitly described or claimed may be additionally included in the structure according to the present invention without deviating from its scope.

## Claims

1. Additive manufacturing system, such as a rapid prototyping system, for building a product, the additive manufacturing system comprising a radiation source for generating radiation, an optical controller that comprises a shutter for selectively allowing radiation generated by the radiation source to pass the shutter, and a system frame for holding a substrate and a reactant in contact with the substrate, said reactant being sensitive to at least part of the radiation generated by the radiation source, wherein the optical controller is arranged for guiding radiation that is generated by the radiation source and is allowed to pass the shutter, towards the reactant for building the product, wherein the shutter comprises:
- a shutter frame having a guide and having shutter frame connectors on selected positions of the shutter frame;
- a shutter blade movable along said guide between said selected positions and comprising a blade connector that can be connected to a shutter frame connector;
- said blade connector being arranged for being disconnectable from the shutter frame connector when a disconnection force on the blade connector is above a threshold disconnection force;
- a launcher provided for acting on the shutter blade to provide a launching force larger than the threshold disconnection force, and for thereby disconnecting the blade connector from the shutter frame connector so as to launch the shutter blade along the guide between said selected positions as a result of the launching force; and
- an energy supply for energizing the launcher.

2. Additive manufacturing system according to claim 1, wherein the shutter frame connectors and/or the blade connector are provided by magnets.

3. Additive manufacturing system according to claim 2, wherein at least one, and preferably all, of the magnets comprise neodynium.

4. Additive manufacturing system according to claim 1, wherein the frame connectors are resiliently mounted to the shutter frame and/or the blade connector is resiliently mounted to the shutter blade.

5. Additive manufacturing system according to claim 1, wherein the launcher comprises launcher springs corresponding to the shutter frame connectors, and spring stops abutting said launcher springs and movable relative to the shutter frame for thus energizing a launcher spring, said launcher springs arranged on either sides of the shutter blade along the guide.

6. Additive manufacturing system according to claim 5, wherein the spring stops are arranged on the guide, the guide being movable relative to the shuttter frame and wherein the energy supply comprises an actuator for moving the guide relative to the shutter frame.

7. Additive manufacturing system according to claim 6, wherein the actuator comprises a solenoid that is mechanically connected to the shutter frame and the shutter blade, and comprises a guide spring connecting the guide and the shutter frame and, when compressed, acting in use on the shutter blade in a direction opposite to a direction of actuation by the solenoid.

8. Additive manufacturing system according to claim 7, wherein the guide comprises a rod movably mounted in the shutter frame and having the shutter blade slidingly connected thereto along the rod, wherein the launcher springs are arranged around the rod.

9. Additive manufacturing system according to claim 1, wherein
the optical controller comprises a filter, preferably a blue filter, and is arranged for guiding the radiation that is generated by the radiation source through the filter towards the reactant for building the product.

10. Additive manufacturing system according to claim 1, wherein the shutter blade, when the blade connector is connected to one of the shutter frame connectors, is in a closed position wherein the shutter blade in use blocks generated radiation, and/or wherein the shutter blade, when the blade connector is connected to another one of the shutter frame connectors, is in an opened position wherein the shutter in use allows generated radiation to pass the shutter.

11. Additive manufacturing system according to claim 10, wherein the shutter frame connectors and/or the blade connector are positioned, and a strength of the shutter frame connectors and/or the blade connector is arranged, so that a travel time of the shutter blade from the opened position to the closed position and/or vice versa is in a range from 0.05 second to 0.5 second, preferably in a range from 0.1 second to 0.3 second.

12. Shutter for selectively allowing radiation generated by the radiation source to pass the shutter, wherein the shutter comprises:
- a shutter frame having a guide and having shutter frame connectors on selected positions of the shutter frame;
- a shutter blade movable along said guide between said selected positions and comprising a blade connector that can be connected to a shutter frame connector;
- said blade connector being arranged for being disconnectable from the shutter frame connector when a disconnection force on the blade connector is above a threshold disconnection force;
- a launcher provided for acting on the shutter blade to provide a launching force larger than the threshold disconnection force, and for thereby disconnecting the blade connector from the shutter frame connector so as to launch the shutter blade along the guide between said selected positions as a result of the launching force; and
- an energy supply for energizing the launcher.

13. Method of building a product by means of an additive manufacturing system, such as a rapid prototyping system, comprising generating radiation by means of a radiation source comprised by the additive manufacturing system, comprising selectively allowing radiation generated by the radiation source to pass a shutter comprised by an optical controller of the additive manufacturing system, and comprising holding a substrate and a reactant in contact with the substrate by means of a system frame, said reactant being sensitive to at least part of the radiation generated by the radiation source, wherein the method further comprises guiding, by means of the optical controller, radiation that is generated by the radiation source and is allowed to pass the shutter, towards the reactant for building the product, the method further comprising:
- moving a shutter blade along a guide comprised by a shutter frame of the shutter between selected positions of the shutter frame, on which selected positions shutter frame connectors are provided;
- connecting a blade connector of the shutter blade to a shutter frame connector;
- disconnecting said blade connector from the shutter frame connector when a disconnection force on the blade connector is above a threshold disconnection force;
- launching, by means of a launcher provided for acting on the shutter blade to provide a launching force larger than the threshold disconnection force, the shutter blade along the guide between said selected positions as a result of the launching force and thereby disconnecting the blade connector from the shutter frame connector; and
- energizing the launcher by means of an energy supply.

14. Method according to claim 13, comprising dampening a shock when the blade connector reaches either one of the shutter frame connectors, preferably by providing a resilient mount for the shutter frame connectors and/or by providing a resilient mount for the blade connector in the shutter blade.

15. Method according to claim 13, carried out by means of an additive manufacturing system according to one of claims 1-11.
